Europäisches Patentamt

European Patent Office

Office européen des brevets

(11) Publication number: **0 443 536 A2**

## EUROPEAN PATENT APPLICATION

(21) Application number: 91102381.0

(51) Int. Cl.5: **H04B 5/00, H01G 4/28**

(22) Date of filing: 20.02.91

(30) Priority: 22.02.90 US 482474

(43) Date of publication of application:
28.08.91 Bulletin 91/35

(84) Designated Contracting States:
DE FR GB IT

(71) Applicant: HONEYWELL INC.
Honeywell Plaza
Minneapolis MN 55408(US)

(72) Inventor: Hamilton, Brian J.
7108 West Sack Drive
Glendale, AZ 85308(US)
Inventor: Neglia, Joseph D.
11459 North 28 Drive - Nr. 2082
Phoenix, AZ 85029(US)

(74) Representative: Rentzsch, Heinz et al
Honeywell Europe S.A. Holding KG Patent &
License Dept. Postfach 10 08 65
Kaiserleistrasse 39
W-6050 Offenbach am Main(DE)

(54) Capacitive data transfer device.

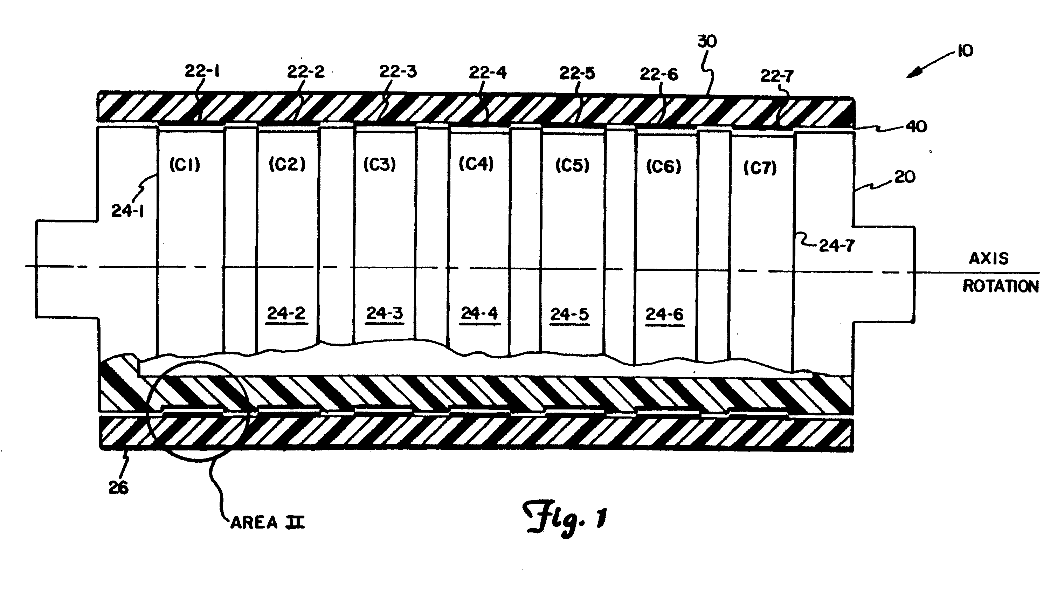

(57) Signals are to be transferred between a first (20) and second (30) member of a rotary device, wherein the first and second members are rotating with respect to one another. A first metallic strip (24) is affixed to a surface of the first member (20). A second metallic strip (22) is affixed to a surface of the second member (30). The surface of the first member and the surface of the second member are in close proximity to one another to form a gap therebetween. The first metallic strip and the second metallic strip face one another across the gap to form a capacitor (C1 to C7) having at least one rotary plate, the capacitor having a predetermined capacitance value (Fig. 1).

Fig. 1

EP 0 443 536 A2

## BACKGROUND OF THE INVENTION

This invention relates to a signal transfer device, and more particularly, to an apparatus for transferring signals across rotary or linear joints.

Precision pointing and tracking systems are currently limited in performance, not by their sensors, but by their bearings. All types of contacting bearings (such as ball bearings or simple bushings) induce friction and stiction effects which are highly nonlinear and difficult to analyze accurately. The sensors on these systems can be much more accurate than the bearings. Some space systems for space exploration currently being developed are requiring unprecedented levels of performance in pointing and tracking systems. Newly developed techniques are being developed to meet these requirements. Also, new and innovative bearing materials to achieve these requirements are being researched. The trend, however, is to move away from any type of contact bearing. The alternative being increasingly used is magnetically suspended bearings. Because they are non-contacting, magnetically suspended bearings avoid the problems associated with friction and stiction effects, and allow much higher performance levels. Even with the substantially higher complexity of magnetic bearings, their usage is increasing due to more stringent performance requirements.

The current problem in these systems is signal and power transfer across the gaps associated with the magnetically or otherwise suspended gimbals. The traditional means of data transfer have been, a) slip rings, b) flex capsules, and/or c) rotary transformers. Slip rings and flex capsules, because they involve a physical connection across the gimbal, are generally undesirable in these high performance, high precision systems. This is a result of the friction and stiction effects, and also because of limited life and wear properties. In addition, flex capsules generally do not allow unlimited rotation, and produce undesirable disturbance torques. Rotary transformers, however, obviate these disadvantages. They are non-contacting, and thus useful in precision systems. However, they are expensive, complex, and heavy. They also require relatively complex driving electronics.

The apparatus of the present invention, the Capacitive Data Transfer Device, provides all the advantages of rotary transformers with none of the disadvantages. The apparatus is extremely light in weight, and can be plated directly onto an already existing gimbal structure. The present invention is inexpensive, simple, and behaves functionally as a simple capacitor. Additionally, in a digital system the present invention requires no additional electronics and is typically many times faster than equivalent rotary transformers.

## SUMMARY OF THE INVENTION

Therefore, there is provided by the present invention, an apparatus for transferring signals across rotary (or linear) joints. The rotary device includes a first and second member which are rotating with respect to one another. The apparatus of the present invention comprises a first metallic strip affixed to a surface of the first member. A second metallic strip is affixed to a surface of the second member. The surface of the first member and the surface of the second member are in close proximity to one another to form a gap therebetween. The first metallic strip and the second metallic strip face one another across the gap to form a capacitor having at least one rotary plate, the capacitor having a predetermined capacitance value, the signals being transferred across the capacitor thus formed.

Accordingly, the present invention provides an apparatus for transferring signals across rotary (or linear) joints.

This apparatus transfers signals across rotary (or linear) joints without a physical connection across the joint.

It is still another feature of the present invention to provide an apparatus for transferring signals across rotary (or linear) joints without adding any disturbance torques to the rotating element.

These and other features of the present invention will become more apparent when taken in conjunction with the following description and attached drawings, wherein like characters indicate like parts, and which drawings form a part of the present application.

## BRIEF DESCRIPTION OF THE DRAWINGS

Figure 1 shows a partial sectional view of a rotating device which can utilize the present invention;
Figure 2 shows an expanded view of a predefined area (Area II) of Figure 1;
Figure 3 shows a logic diagram of the circuitry utilized to transmit signals between the rotary joint;
Figure 4 shows an alternative embodiment of the present invention; and
Figure 5 shows some configurations of the metallic plates and the corresponding capacitance values.

2

DETAILED DESCRIPTION

High pass filters are generally utilized to allow high speed digital transmission to occur over long distances. A simple RC network having a transfer function for magnitude

$$V_0 = \frac{R\ V_i}{[R^2 + (1/w^2c^2)]^{1/2}}$$

and, for phase

$$\theta = \tan^{-1}\frac{-1}{wRC}$$

has the properties that the output magnitude and phase duplicates the input signals at high frequencies ($w \geq 1/RC$). This fact is useful especially where high speed digital communications are required. The present invention takes advantage of this fact by duplicating the high-pass filter, with the exception being that the series capacitor is replaced by a mechanical capacitor. This mechanical capacitor has plates which can move with respect to each other without changing the value of its capacitance. Thus, high speed digital signals can be transferred across a gap with no mechanical contact required.

Referring to Figure 1, there is shown a partial sectional view of a rotating device in which the present invention can be utilized. A rotary device 10 includes a rotor 20 and a stator 30, the rotor 20 mounted within an area enclosed by the stator 30, and capable of rotating about an axis, AXIS OF ROTATION. The rotor can be supported by standard ball bearings (not shown), by magnetic bearings (not shown), ... or by any other support element, conventional or unconventional. The support is not necessary to the understanding of the present invention and will not be discussed further. The rotor 20 is mounted such that a gap 40 exists between the rotor 20 and stator 30.

In the structure of the rotating device 10 of the preferred embodiment, the rotor 20 rotates about the AXIS OF ROTATION, the stator 30 being stationary. Any device(s) for tracking, pointing, ..., which include gyros, etc. mounted on the rotor 20, requires the exchange of signal information (control, data), either analog or digital, power, ... between the rotor and stator. The present invention utilized on this rotating device 10 achieves the transfer of the signal information across the gap 40, as will now be discussed.

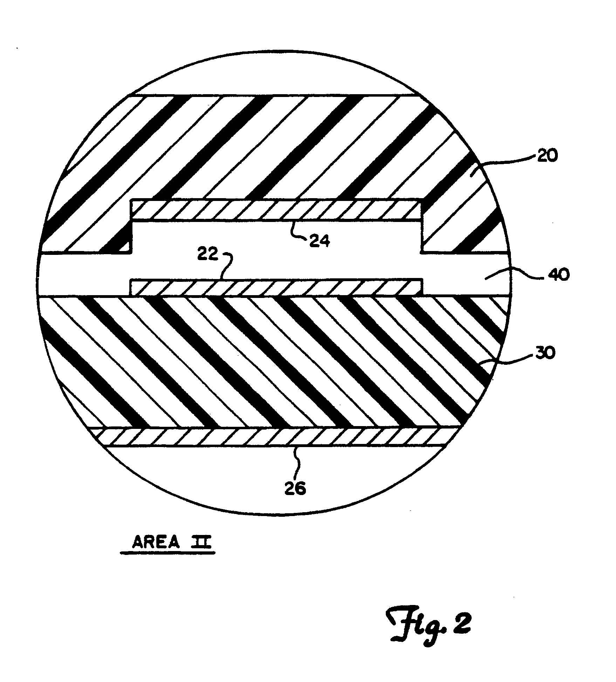

Referring to Figure 2, there is shown an expanded view of the area II of Figure 1. Capacitive plates 22, 24, are fabricated on opposite sides of the gap 40 directly onto the rotor 20, and stator 30, respectively. (The preferred embodiment of the present invention also includes an outside metallic plate 26.) The electric field caused to exist between these plates provide for the transfer of signals across the gap 40 (sometimes referred to herein as rotary joint or capacitive rotary joint).

Referring back to Figure 1, there is shown capacitive plates 22-1, 24-1 which have the metallic element forming the plates deposited circumferentially on the rotor 20 and stator 30 about the AXIS OF ROTATION, the plates facing each other across the gap 40, and forming a first capacitor $C_1$. In a similar fashion, plates 22-2 and 24-2 are fabricated on the surfaces of the rotor 20 and stator 30 also about the AXIS OF ROTATION, forming a second capacitor $C_2$. In a similar fashion, plates 22-3 to 22-7 and 24-3 to 24-7 are fabricated to form capacitors $C_3$ through $C_7$, respectively.

Thus it can be seen that the preferred embodiment of the present invention has formed seven capacitors, $C_1$ through $C_7$. Two data channels are formed by two capacitors differentially excited, and ground returns through three capacitors are provided. Since some crosstalk exists between channels due to fringe capacitance, ground capacitors between channels are utilized to minimize these effects of fringe capacitance. Therefore, in the preferred embodiment of the present invention, capacitors $C_5$ and $C_6$ are used for channel 1 communications, and $C_2$ and $C_3$ are used for channel 2 communications. $C_1$, $C_4$, and $C_7$ are used for the ground return. In addition, differential excitation is utilized to increase noise immunity and to further reduce the effects of the fringe capacitance. Thus, two capacitors are needed for a single channel of communication.

It will be recognized by those skilled in the art that the number of capacitors may vary without limiting the scope or spirit of the present invention. It will be further recognized by those skilled in the art that different techniques may be employed to transfer signals across the gap utilizing the capacitors formed by the fabrication of the metallic plates on the stator and rotor.

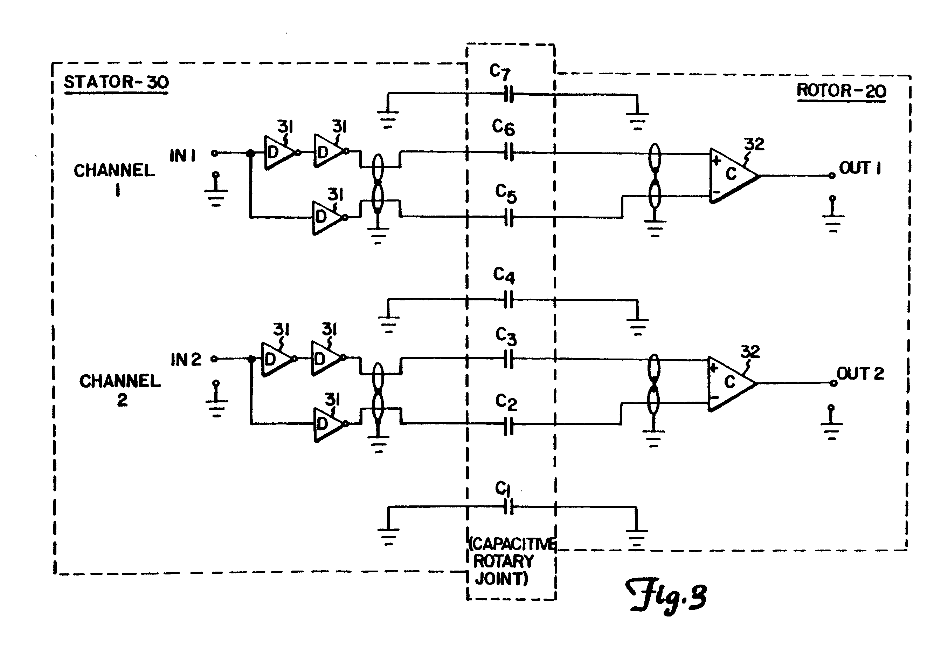

Referring to Figure 3, there is shown a logic diagram of the circuitry utilized to drive the rotary joint and the circuitry utilized to read the output. The stator 30 inputs signals to the rotor 20 via channel 1 and channel 2 utilizing drivers (D) 31 and the respective capacitors, $C_5$ and $C_6$ for channel 1, and $C_2$ and $C_3$ for channel 2. The differential signals for the respective capacitors are generated by using one inverted and one non-inverted copy of the input. At the receiving end, comparators (C) 32 interpret the differential signals received. The driver 31 utilized in the preferred embodiment of the present invention are 54LS04 drivers, and the comparators 32 utilized are LM111 comparators. The capacitors formed in the rotor joint each have a value of approximately 60 pf. The input signals are digital signals of between 0,1 to 1 MHz. At these frequencies, no significant cross talk between channels exists. For lower frequencies, the signals become more difficult to read and are more susceptible to noise. For higher frequencies, the stray/parasitic capacitances become more dominant with accompanying degradation of operation. Although the signal of the preferred embodiment utilizes digital signals it will be recognized that analog signals may be used. Also, although not shown, signals can be generated by circuitry on the rotor 20 and transmitted to the stator 30.

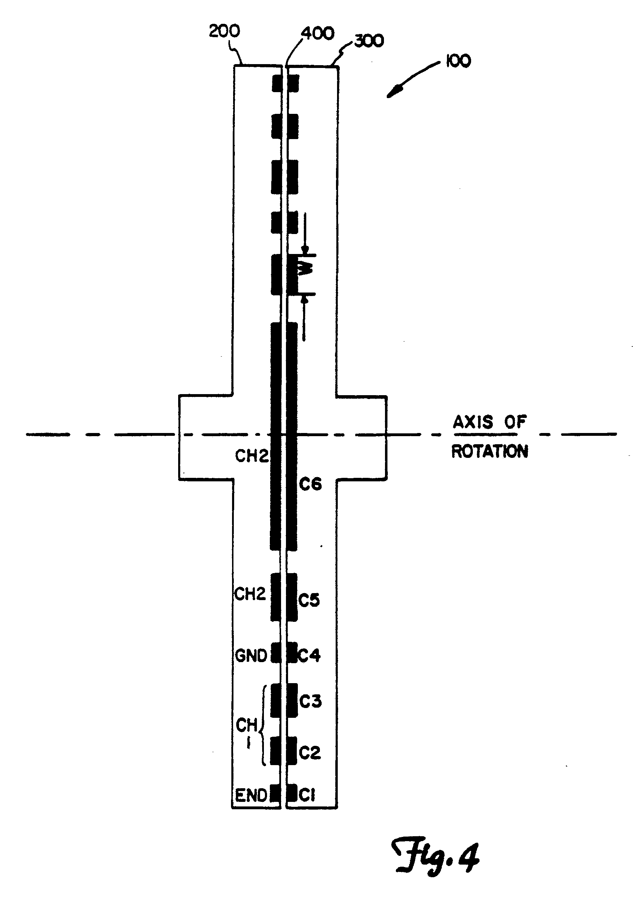

Referring to Figure 4, there is shown an alternative embodiment of the present invention. Two disk plates 200, 300 (either or both can be rotating about an AXIS OF ROTATION) separated by a gap 400 have metallic strips fabricated on the respective disks 200, 300 facing each other. The width (w) vary between capacitors, but the areas of each capacitor are equal, since the radius of the metallic circles increase as the metallic strips get further away from the AXIS OF ROTATION. Since the areas are equal, the capacitance values are equal (or can be made to vary as a design choice). Six capacitors $C_1$ - $C_6$ are formed having 2 communication channels, as above.

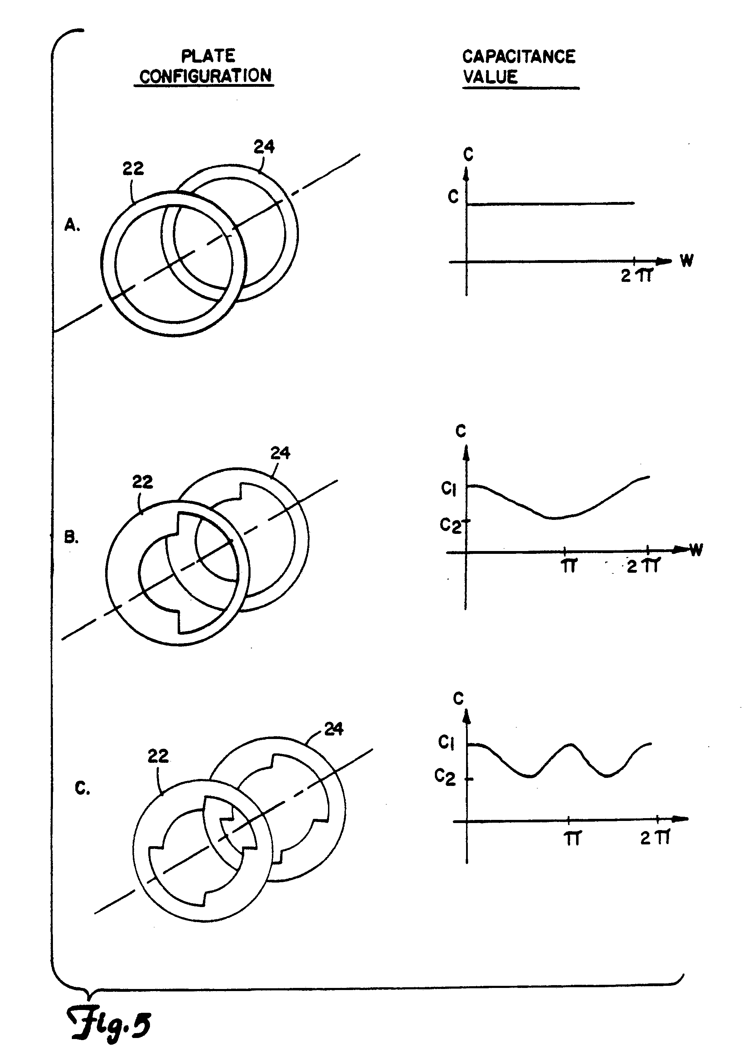

It will be recognized by those skilled in the art that the capacitance value of the capacitor formed by the first metallic plate 22 and the second metallic plate 24 is fixed through a full rotation of the rotor 20, as shown in Figure 5A. Referring to Figure 5 there is shown some configurations of the metallic plates 22, 24 (without the rotor 20, 200 and stator 30,300 for simplicity) and the corresponding capacitance value as a function of revolution of the metallic plates 22, 24 (i.e., the rotor 20, 200 and stator 30, 300). Figure 5B shows the capacitance vary between 2 values $C_1$ and $C_2$ as a function of the revolution of rotor and stator. Figure 5C shows that the capacitance values can be made to vary between two values $C_1$ and $C_2$ a multiple number of times n (in this case n = 2) of a revolution. Those skilled in the art will understand the various configurations that can be employed to give a desired capacitance value for some predefined function.

## Claims

1. An apparatus for transferring signals between a first and second member, wherein the first (20) and second (30) members are rotating with respect to one another, said apparatus, **characterized by:**
   a) a first metallic strip (24) affixed to a surface of said first member (20); and
   b) a second metallic strip (22) affixed to a surface of the second member (30), the surface of the first member (20) and the surface of the second member (30) being in close proximity to form a gap (40) therebetween, said first metallic strip (24) and said second metallic strip (22) facing one another across the gap (40) thereby forming a capacitor having at least one rotary plate (24), the capacitor having a predetermined capacitance value, the signals being transferred across the capacitor thus formed.

2. The apparatus of claim 1, **characterized in that** the capacitance value is fixed throughout the rotation of the members (20, 30).

3. The apparatus of claim 1, **characterized in that** the capacitance value varies as a function of the revolution of the members (20, 30).

4. The apparatus of claim 1, 2 or 3, **characterized in that** said signals are analog signals.

5. The apparatus of claim 1, 2 or 3, **characterized in that** said signals are digital signals.

6. An apparatus for transferring signals between a first (20) and second member (30), wherein the first (20) and second (30) members are rotating with respect to one another, said apparatus (10), **characterized by:**

a) a plurality of first metallic strips (24-1, 24-2, ..., 24-7) affixed to a surface of said first member (20); and

b) a plurality of second metallic strips (22-1, 22-2, ..., 22-7) affixed to a surface of the second member (30), the surface of the first member (20) and the surface of the second member (30) being in close proximity to one another to form a gap (40) therebetween; whereat

c) corresponding ones of said first metallic strips (24 facing corresponding ones of said second metallic strips (22) across the gap thereby form a corresponding number of capacitors (C1 to C7), and

d) each capacitor has a predetermined capacitance value and the signals are transferred across selected ones of the capacitors (C1 to C7) thus formed.

7. An apparatus for transferring signals between elements of a rotating device, the rotating device having a rotation axis, said apparatus, **characterized by:**

a) a rotor (20 or 30; 200 or 300), having an axis which is coindicent with the rotation axis, and having a surface symmetrical about the rotor axis;

b) a stator (30 or 20; 300 or 200), having an axis which is coincident with the rotation axis, and having a surface symmetrical about the stator axis; wherein

c) the rotor (20 or 30) and stator (30 or 20) are placed in relationship to one another such that the rotor surface and stator surface are in proximity to one another to form a gap (40, 400);

d) the gap has a fixed distance such that the distance between the rotor surface and the stator surface is essentially fixed at any point of either surface and remains fixed even as the rotor rotates; and

e) the rotor and stator also are placed in relationship to one another such that the rotor axis and the stator axis are coincident; further **characterized by**

f) at least one first metallic strip (24 or 22) affixed to the rotor surface, each first metallic strip being symmetrical about the rotor axis and forming a first plate of a respective capacitor;

g) at least one second metallic strip (22 or 24) affixed to the stator surface, each second metallic strip being symmetrical about the stator axis and forming a second plate of the respective capacitor;

h) each second metallic strip being opposite a corresponding first metallic strip on the rotor;

i) each first metallic strip and the corresponding second metallic strip forming a capacitor having a fixed capacitance value; and

j) the signals being transferred across selected ones of the capacitors (C1 to C7) thus formed.

8. The apparatus according to one of the claims 1 to 7, **characterized in that** the opposing surfaces of the stator and the rotor are cylindrically shaped and are concentric to each other and to a common axis (Fig. 1).

9. The apparatus according to one of the claims 1 to 7, **characterized in that** the stator and the rotor (200, 300) are disc-shaped and the opposing surfaces are provided at opposing front surfaces of those discs (Fig. 4).

10

40

20

AXIS
ROTATION

24-7

22-7    (C7)

30

22-6    (C6)    24-6

22-5    (C5)    24-5

22-4    (C4)    24-4

22-3    (C3)    24-3

22-2    (C2)    24-2

22-1    (C1)

24-1

AREA II

26

Fig. 1

AREA II

Fig. 2

*Fig.3*

STATOR-30

ROTOR-20

CHANNEL 1

IN 1

31 31 31

$C_7$ $C_6$ $C_5$

32

OUT 1

CHANNEL 2

IN 2

31 31 31

$C_4$ $C_3$ $C_2$

32

OUT 2

$C_1$

(CAPACITIVE ROTARY JOINT)

EP 0 443 536 A2

Fig.4

**Fig. 5**